# EUROPEAN PATENT SPECIFICATION

(11) **EP 0 393 735 B1**
(45) Date of publication and mention of the grant of the patent: **08.06.1994**
(21) Application number: 90200610.5
(22) Date of filing: 14.03.1990
(51) Int. Cl.: A01G 9/02

(54) **Wall on which vegetation can grow**
Mauer, worauf Pflanzen wachsen können
Paroi pour la croissance de la végétation

(30) Priority: 17.03.1989 NL 8900665
(43) Date of publication of application: 24.10.1990
(73) Proprietor: Rockwool/ Grodan B.V., NL-6074 NH Melick-Herkenbosch (NL)
(72) Inventor: De Groot, Jacob Frank, NL-6042 KK Roermond (NL)
(74) Representative: Prins, Hendrik Willem

(56) References cited:
- EP-A- 0 209 958
- DE-A- 3 144 353
- NL-A- 8 601 019
- US-A- 3 894 355

## Description

The present invention relates to a wall on which vegetation can grow. Such a wall comprises a vegetation substrate in which the vegetation can thrive and in addition means for adding liquid, for instance water to which nutrients have been added, to the panel. If for such a panel-like vegetation substrate a mineral wool is employed, the problem arises that in practical conditions insufficient water can be added to such a panel of mineral wool in order to achieve an average moisture content of at least roughly 30% by vol over the height of the panel. This minimal moisture content is essential for the purpose of providing a panel where vegetation can thrive over the panel height.

NL-A-8601019 discloses a wall on which vegetation can grow comprising a frame carrying several panels of a vegetation substrate, and further means for adding liquid to and means for collecting liquid from the panel. Each panel is built up of one layer of mineral wool supported by a beam on which liquid is collected. In the upper part of each panel there will prevail a too low water content.

The present invention is based on the observation that in a panel of mineral wool, as a result of capillary rising, a bottom layer is present that is provided with water. By constructing the panel from layers of mineral wool that are in mutual capillary separation using a capillary-separating material a layered panel results in which the layers are each provided with water over a determined rise height as a consequence of capillary rising.

The wall coverable with vegetation according to the invention comprises a frame, at least one panel carried by said frame and containing a vegetation substrate, means for adding liquid at the top of said panel, means for collecting liquid at the bottom of said panel, wherein said panel is built up of at least two stacked layers of mineral wool which are mutually separated by a capillary-separating material, and is characterized in that the capillary-separating material is water permeable in itself such that the suction pressure prevailing in one layer cannot exert any influence on the adjacent layer of mineral wool.

What might be understood by a layer of mineral wool suitable for vegetation substrate is a mineral wool, such as rockwool, provided with a wetting agent, which results in the mineral wool becoming more water absorbent (see the Netherlands patent no. 165789). Glass wool is also suitable.

The capillary rising height of liquid in the mineral wool depends on the one hand on the wetting agent used and on the other on the density of the mineral wool. With the use of rockwool the density must be greater than 30 kg per m³ and preferably greater than 50 kg per m³, while very satisfactory results are achieved with densities greater than 70 and preferably greater than 90 kg per m³.

In accordance with the invention what is understood by a capillary-separating material are those materials which can establish a capillary separation between layers of mineral wool, that is, that the suction pressure prevailing in a layer cannot exert any influence on the layers of mineral wool located above and below it. In addition these capillary-separating materials must be water permeable, although it is in principle possible to distribute the liquid through each underlying layer in turn. Use can be made as capillary-separating material of for instance the curing profile which can be present in the manufacture of the mineral wool as blanket on the lying blanket surfaces. For a description of the oven profile and the manufacture of such mineral wool blankets reference is made to the European patent application EP-A-277.397. In preference a bottom curing profile is used since its capillary-separating character is comparatively great, while as a web the profile is relatively well water permeable.

According to another embodiment the capillary-separating material may consist of a skin provided with pores, or more particularly the material can be selected from a coarse-mesh tissue or net, a plastic foil provided with pores or a (glass) fibre web.

In addition to the curing oven profile other types of capillary-separating material can be fixedly connected to the layer of mineral wool. So for example a (glass) fibre web or other plastic foil can he attached fixedly during its manufacture to the mineral wool blanket from which the layers are cut. As a result a very easily handled material is provided for the assembly of the package.

Since the capillary rising height directly determines the moisture content in the layer and with an eye to the minimal moisture contents through the panel and the layers, the layer thickness is approximately equal to 2-10 cm, and preferably 3-7 cm, for instance 5 cm. The number of layers in a panel amounts to 2-40, preferably 5-30 and more preferably 7-15.

For the erecting of walls of relatively great height it is recommended to dispose a number of panels under each other, whereby for the distribution of the liquid through the panels disposed under each other these panels are more preferably separated from each other by liquid discharge and supply means.

For a uniform and reliable distribution over the whole length of a panel it is recommended that at least the upper panels are provided with drippers arranged spread along the length of and above the panel. These drippers can be connected to a central feed line which may optionally be incorporated in a circuit, which will result in comparatively little water being able to dissipate into the environment. Minimal evaporation and a selected visual surface for the wall are obtained if more preferably a visual plate provided with plant holes is arranged in front of the panel.

Mentioned and other features of the wall coverable with vegetation according to the invention will be further elucidated hereinafter on the basis of a number of embodiments which are described with reference to the annexed drawings, in which:
figure 1 is a perspective, partly broken away view of a wall according to the invention;
figures 2 and 3 each show an enlarged detail from figure 1 for different embodiments;
figures 4 and 5 show mineral wool layers each of which is provided with a different capillary-separating material;
figure 6 shows a perspective view of a panel package in which a panel according to the invention is arranged in a coarse-mesh net; and
figure 7 shows in front view another embodiment in which the capillary-separating material is arranged between the layers of mineral wool in zig-zag fashion.

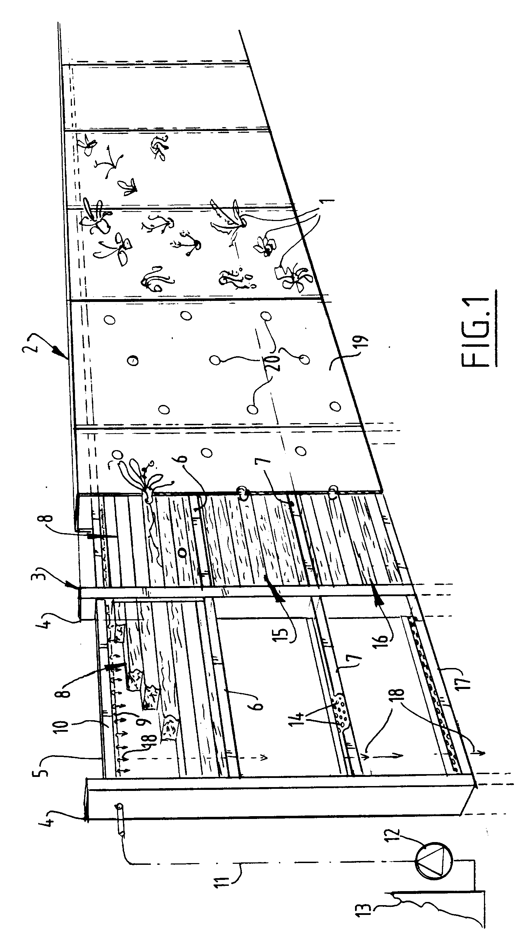

Figure 1 shows a wall 2 covered with vegetation 1 such as plants as according to the invention. The wall 2 comprises a frame 3 consisting of upright posts 4 having beams 5-7 arranged between them. The beams 5 are gutter-shaped, while the beams 6 and 7 are provided with holes 14 which allow passage of liquid. The beams 6 and 7 bear a panel 8 which serves as vegetation substrate. Disposed above each panel 8 is a drip line 10 which is provided with drip openings or drippers 9 and which is connected to a central liquid feed line 11 which is joined via a pump 12 to a liquid reservoir 13. The liquid consists of water to which nutrients may optionally be added periodically. Liquid 18 that is delivered through the openings 9 seeps through the panel 8, is collected in the beam 6 and is subsequently fed to the panel 15 lying beneath and distributed through it via the holes 14, is collected after seeping through panel 15 in the beam 7 and after distribution via the holes 14 is fed to the panel 16 lying below that, and so on. The liquid 18 is collected via the lowest beam 17 and returned via a line (not shown) to the reservoir 13, and if desired the liquid 18 can be discharged to the ground. In order to counter evaporation and temperature variations the wall 2 is closed off with a visual wall 19 which is provided with plant holes 20, through which the vegetation 1 emerges to the outside.

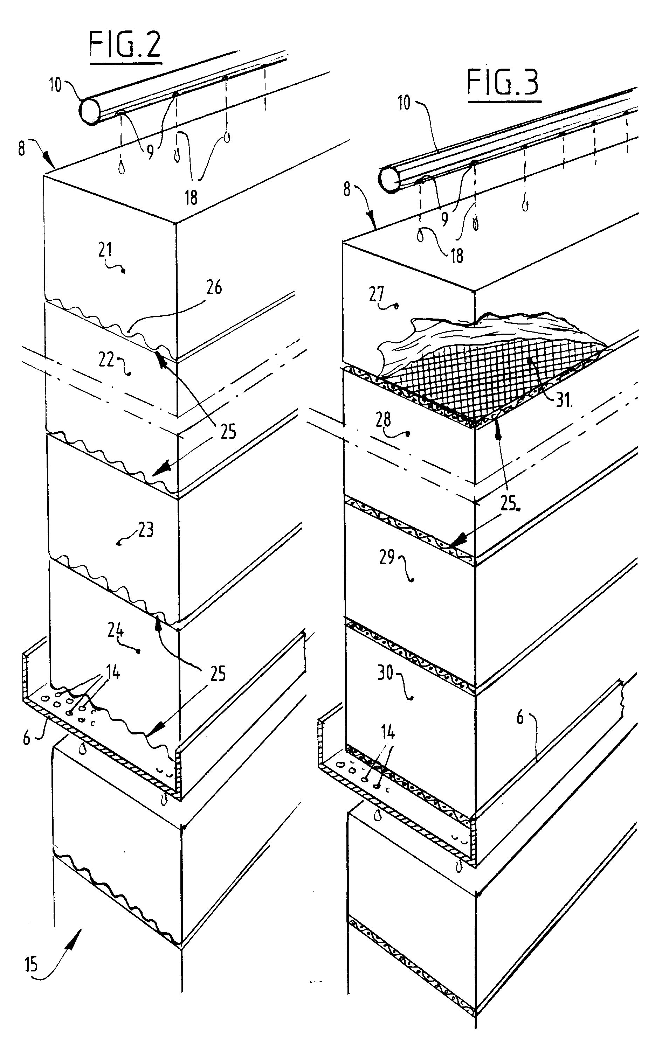

Figure 2 shows in more detail the construction of the packages 8 and 15. The package 8 is built up of 6-12 stacked layers 21-24 of mineral wool which are mutually separated by a capillary-separating material 25. In the case of the embodiment of figures 1 and 2 the capillary-separating material 25 consists of a curing oven profile 26 that is fixedly connected to the layer of mineral wool and possesses in contrast thereto a skin-like, hydrophobic form which is however water permeable.

In the embodiment shown in figure 3 the package 8 consists of layers 27-30 of mineral wool which are mutually separated by a capillary-separating material 25 which consists in this case of a coarse-mesh net 31 of plastic fibres, for instance a net woven from polyethene threads, obtainable on the market under the trade name Ostend Net^{R} or Enka drain.

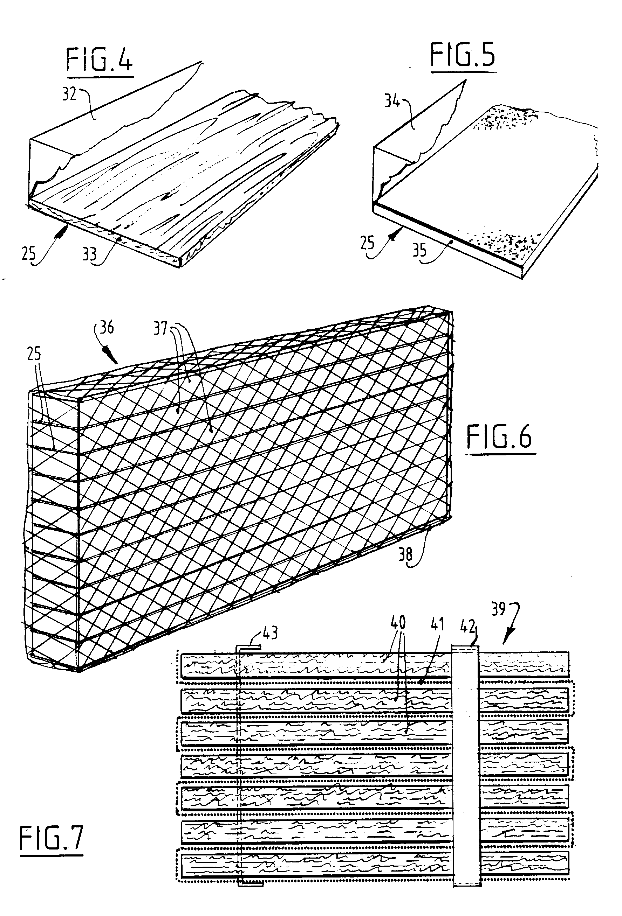

Figure 4 shows a layer of mineral wool 32 which is provided with a fibre web 33 fused thereto during manufacture.

The layer of mineral wool 34 shown in figure 5 is provided on the bottom with a plastic foil 35 provided with pores.

Although not stated in as many words, it will be apparent that layers with capillary-separating material arranged sandwich-like thereon can be used alternately with layers of mineral wool because in this configuration the layers are also divided in each case by a capillary-separating material 25.

For easy handling of the packages, stacks of mineral wool layers and interposed capillary separation material are formed and these stacks are kept together using straps 42 slung around the stacks and/or metal or plastic pins 43 extending through the stacks (see figure 7).

Figure 6 shows a panel 36 according to the invention that is assembled from a number of layers of mineral wool 37 which are in turn mutually separated by a layer of capillary-separating material 25. This package 36 is formed into a very manageable product because it is arranged in a very coarse-mesh net 38 stretched around it, which, if desired, need not be removed during arranging of the panel 36 in the wall 1 according to the invention.

Finally, figure 7 shows another package 39 according to the invention in which the layers 40 of mineral wool are mutually separated by a plastic foil 41 provided with pores which is arranged between the layers 40 in zig-zag manner.

As mentioned, the moisture content in each layer, and ultimately in the whole panel, depends on the capillary suction capacity of each layer and the effectiveness of the separation by the capillary-separating material. The capillary suction height is determined among other things by the density of the mineral wool. In this way it is possible in the case of a mineral wool with a very good suction capacity to use a less good or completely separating capillary-separating material, or vice-versa.

The wall shown in figure 1 was used in an experiment. Each package 8, 15 and 16 consisted of 16 layers of mineral wool with a density of around 90 kg/m³ and a layer height of 3 cm. For a two-day period water was dripped on via the drip line 10 (12l/hour). After two days the moisture content in the bottom layer 24 amounted to 79% by vol, while the moisture content of the layers above 21-23 varied from 50 to 79% by vol. The water supply was subsequently discontinued for two days. The moisture content of the bottom layer remained the same, as did the moisture content in the layers above. Only in the case of the top layer 21 did the moisture content decrease slightly to about 62% by vol.

In order to illustrate the effect of the drip frequency, experiments were performed whereby water was supplied for one two-hour period every twenty-four hours, twice for a one-hour period every twelve hours and four times for half an hour every six hours. The mean moisture percentages at a water delivery of 25 litres amounted respectively to 37, 36 and 38% by vol.

## Claims

1. Wall (2) on which vegetation (1) can grow comprising a frame (3), at least one panel (8,36,39) carried by said frame and containing a vegetation substrate, means (10,11) for adding liquid (18) at the top of said panel (8,36,39), means (6,7,17) for collecting liquid at the bottom of said panel (8,36,39), wherein said panel (8,36,39) is built up of at least two stacked layers (21-24;27-30; 32;34) of mineral wool which are mutually separated by a capillary-separating material, characterized in that the capillary-separating material is water permeable in itself such that the suction pressure prevailing in one layer (21-24;27-30;32;34) cannot exert any influence on the adjacent layer (21-24;27-30;32;34) of mineral wool.

2. Wall (2) as claimed in claim 1, wherein the capillary-separating material (25) consists of a curing oven profile (26).

3. Wall (2) as claimed in claim 1 or 2, characterized in that the capillary-separating material (25) consists of a skin-like material (31,33,35) provided with pores.

4. Wall (2) as claimed in claim 3, wherein the capillary-separating material (25) is chosen from a coarse-mesh tissue or net (31), a plastic foil (35) provided with pores or a (glass) fibre web (33).

5. Wall (2) as claimed in claims 1-4, wherein the capillary-separating material (25) is fixedly connected to the layer (21-24) of mineral wool.

6. Wall (2) as claimed in claims 1-5, wherein the layer height is substantially equal to or greater than the capillary rising height of the liquid in said layer.

7. Wall (2) as claimed in claim 6, wherein the layer height is approximately equal to 2-10 cm, and preferably 3-7 cm, for instance 5 cm.

8. Wall (2) as claimed in claims 1-7, wherein a number of panels (8,15,36) are arranged beneath each other.

9. Wall (2) as claimed in claim 8, wherein the panels arranged under each other are mutually separated by liquid discharge (6,7) and supply means (6,7).

10. Wall (2) as claimed in claims 1-9, wherein the liquid supply means (10) comprise drippers (10) arranged spread above the panel (8).

11. Wall (2) as claimed in claim 10, wherein the drippers (10) are connected to a central feed line (11).

12. Wall (2) as claimed in claim 10 or 11, wherein the liquid is added to the wall in a circuit.

13. Wall as claimed in claims 1-12, wherein a visual plate (19) provided with plant holes (20) is arranged in front of the panel.

14. Panel (8,36,39) for a wall as claimed in claims 1-13, constructed from at least two stacked layers (21-24; 27-30;32;34) of mineral wool that are mutually separated by a capillary-separating material (25) being water permeable in itself such that the suction pressure prevailing in one layer (21-24;27-30;32;34) cannot exert any influence on the adjacent layer (21-24;27-30;32;34) of mineral wool.

## Patentansprüche

1. Wand (2), auf welcher Vegetation (1) wachsen kann, aufweisend einen Rahmen (3), mindestens eine Füllwand (8, 36, 39), die von dem Rahmen getragen wird, und die ein Vegetationssubstrat enthält, Mittel (10, 11) zum Hinzufügen von Flüssigkeit (18) an der Oberseite der Füllwand (8, 36, 39), Mittel (6, 7, 17) zum Sammeln von Flüssigkeit am Boden der Füllwand (8, 36, 39), wobei die Füllwand (8, 36, 39) aus mindestens 2 gestapelten Schichten (21-24; 27-30; 32-34) aus Mineralwolle gebildet ist, die gegenseitig durch ein kapillartrennendes Material getrennt sind, dadurch gekennzeichnet, daß
das kapillartrennende Material selbst wasserdurchlässig ist, so daß der in einer Schicht (21-24; 27-30; 32; 34) vorherrschende Saugdruck keinen Einfluß auf die benachbarte Schicht (21-24; 27-30; 32; 34) aus Mineralwolle ausüben kann.

2. Wand (2) nach Anspruch 1, dadurch gekennzeichnet, daß
das kapillartrennende Material (25) aus einem Aushärt-Ofenprofil (26) besteht.

3. Wand (3) nach Anspruch 1 oder 2, dadurch gekennzeichnet, daß
das kapillartrennende Material (25) aus einem hautartigen Material (31, 33, 35) besteht, das mit Poren versehen ist.

4. Wand (2) nach Anspruch 3, dadurch gekennzeichnet, daß
das kapillartrennende Material (25) aus einem grobmaschigen Tuch oder Netz (31), einer mit Poren versehenen Plastikfolie (35) oder einem (Glas-)Fibergewebe (33) ausgewählt wird.

5. Wand (2) nach den Ansprüchen 1-4, dadurch gekennzeichnet, daß
das kapillartrennende Material (25) fest mit der Schicht (21-24) aus Mineralwolle verbunden ist.

6. Wand (2) nach den Ansprüchen 1-5, dadurch gekennzeichnet, daß
die Schichthöhe im wesentlichen gleich oder höher als die kapillare Anstiegshöhe der Flüssigkeit in der Schicht ist.

7. Wand (2) nach Anspruch 6, dadurch gekennzeichnet, daß
die Schichthöhe etwa gleich 2-10cm ist und vorzugsweise 3-7cm ist, beispielsweise 5cm.

8. Wand (2) nach den Ansprüchen 1-7, dadurch gekennzeichnet, daß
eine Anzahl von Füllwänden (8, 15, 36) untereinander angeordnet ist.

9. Wand (2) nach Anspruch 8, dadurch gekennzeichnet, daß
die untereinander angeordneten Füllwände voneinander durch Flüssigkeitsauslaß- (6, 7) und -zuführungmittel (6, 7) getrennt sind.

10. Wand (2) nach den Ansprüchen 1-9, dadurch gekennzeichnet, daß
die Flüssigkeitszuführungsmittel (10) Tropfer (10) aufweisen, die oberhalb der Füllwand (8) verteilt angeordnet sind.

11. Wand (2) nach Anspruch 10, dadurch gekennzeichnet, daß
die Tropfer (10) mit einer zentralen Zuführungsleitung (11) verbunden sind.

12. Wand (2) nach Anspruch 10 oder 11, dadurch gekennzeichnet, daß
die Flüssigkeit der Wand in einem Kreis zugeführt wird.

13. Wand (2) nach den Ansprüchen 1-12, dadurch gekennzeichnet, daß
eine Sichtplatte (19), die mit Pflanzenöffnungen (20) versehen ist, vor der Füllwand angeordnet ist.

14. Füllwand (8, 36, 39) für eine Wand nach den Ansprüchen 1-13, die aus mindestens 2 gestapelten Schichten (21-24; 27-30; 32; 34) aus Mineralwolle gebildet ist, die gegeneinander durch ein kapillartrennendes Material (25) getrennt sind, das selbst wasserdurchlässig ist, so daß der in einer Schicht vorherrschende Saugdruck (21-24; 27-30; 32; 34) keinen Einfluß auf die benachbarte Schicht (21-24; 27-30; 32; 34) aus Mineralwolle ausüben kann.

## Revendications

1. Paroi (2) sur laquelle de la végétation (1) peut croître, comprenant un châssis (3), au moins un panneau (8, 36, 39) porté par le châssis et contenant un substrat pour la végétation, des moyens (10, 11) d'addition de liquide (18) à la partie supérieure du panneau (8, 36, 39), des moyens (6, 7, 17) destiné à collecter le liquide à la partie inférieure du panneau (8, 36, 39), ledit panneau (8, 36, 39) étant formé d'au moins deux couches empilées (21-24 ; 27-30 ; 32 ; 34) de laine minérale qui sont séparées mutuellement par un matériau de séparation capillaire, caractérisée en ce que le matériau de séparation capillaire est perméable à l'eau par lui-même si bien que la pression d'aspiration régnant dans une couche (21-24 ; 27-30 ; 32 ; 34) ne peut pas exercer une influence quelconque sur la couche adjacente (21-24 ; 27-30 ; 32 ; 34) de laine minérale.

2. Paroi (2) selon la revendication 1, dans laquelle le matériau (25) de séparation capillaire comprend une matière à profil durci au four (26).

3. Paroi (2) selon la revendication 1 ou 2, caractérisée en ce que le matériau (25) de séparation capillaire est constitué d'un matériau (31, 33, 35) analogue à un revêtement ayant des pores.

4. Paroi (2) selon la revendication 3, dans laquelle le matériau de séparation capillaire (25) est choisi parmi un tissu ou un tulle à mailles grossières (31), une feuille de matière plastique (35) ayant des pores et une nappe de fibres (de verre) (33).

5. Paroi (2) selon les revendications 1 à 4, dans laquelle le matériau de séparation capillaire (25) est raccorde à demeure à la couche (21-24) de laine minérale.

6. Paroi (2) selon les revendications 1 à 5, dans laquelle la hauteur de couche est pratiquement égale ou supérieure à la hauteur de remontée capillaire du liquide dans la couche.

7. Paroi (2) selon la revendication 6, dans laquelle la hauteur de la couche est approximativement comprise entre 2 et 10 cm et de préférence entre 3 et 7 cm, par exemple de 5 cm.

8. Paroi (2) selon les revendications 1 à 7, dans laquelle un certain nombre de panneaux (8, 15, 36) sont placés les uns au-dessous des autres.

9. Paroi (2) selon la revendication 8, dans laquelle les panneaux placés les uns sous les autres sont séparés mutuellement par des moyens d'évacuation (6, 7) de liquide et d'alimentation (6, 7) en liquide.

10. Paroi (2) selon les revendications 1 à 9, dans laquelle le dispositif (10) d'alimentation en liquide comprend des organes de ruissellement (10) répartis au-dessus du panneau (8).

11. Paroi (2) selon la revendication 10, dans laquelle les organes de ruissellement (10) sont raccordés à une canalisation centrale (11) d'alimentation.

12. Paroi (2) selon la revendication 10 ou 11, dans laquelle le liquide est ajouté à la paroi dans un circuit.

13. Paroi selon les revendications 1 à 12, dans laquelle une plaque de parement (19) ayant des trous (20) de passage de plantes est disposée en avant du panneau.

14. Panneau (8, 36, 39) destiné à une paroi selon les revendications 1 à 13, construit à partir d'au moins deux couches empilées (21-24 ; 27-30 ; 32 ; 34) de laine minérale qui sont séparées mutuellement par un matériau de séparation capillaire (25) qui est perméable à l'eau par lui-même, si bien que la pression d'aspiration régnant dans une couche (21-24 ; 27-30 ; 32 ; 34) ne peut avoir aucune influence sur la couche adjacente (21-24 ; 27-30 ; 32 ; 34) de laine minérale.
